# EUROPEAN PATENT APPLICATION

(11) **EP 2 790 293 A1**
(43) Date of publication of application: **15.10.2014**
(21) Application number: 12856329.3
(22) Date of filing: 27.11.2012
(51) Int. Cl.: H02J 17/00, B60L 11/18, H02J 7/00

(54) **CONTACTLESS POWER TRANSMISSION DEVICE**

(30) Priority: 09.12.2011 JP 2011270407
(71) Applicant: Kabushiki Kaisha Toyota Jidoshokki, Kariya-shi, Aichi 448-8671 (JP)
(72) Inventor: MATSUKURA, Keisuke, Kariya-shi Aichi 448-8671 (JP); KONDO, Tadashi, Kariya-shi Aichi 448-8671 (JP)
(74) Representative: TBK
(86) International application number: PCT/JP2012/080638
(87) International publication number: WO 2013/084754

(57) **Abstract**

A contactless power transmission device is provided with an AC power source, a primary coil, a secondary coil, an electric component and a power factor calculation unit. The primary coil is supplied with AC power from the AC power source. The secondary coil is allowed to receive AC power from the primary coil. The electric component is supplied with the AC power that is received by the secondary coil. The power factor calculation unit calculates at least either the power factor with respect to the load from the output of the AC power source to the electric component, or the power factor with respect to the load from the output of the secondary coil to the electric component.

## Description

### TECHNICAL FIELD

The present invention relates to a contactless power transmission device.

### BACKGROUND ART

A contactless power transmission device that uses, for example, magnetic field resonance instead of a power supply cord or a power transmission cable is known in the prior art. For example, in patent document 1, a power supplying device includes an AC power supply and a primary side resonance coil, which is supplied with AC power from the AC power supply. The vehicle includes a secondary side resonance coil, which is capable of performing magnetic field resonance with the primary side resonance coil, and a vehicle battery. When the resonance coils undergo magnetic field resonance, AC power is transmitted to the secondary side resonance coil. A rectifier, which is arranged in the vehicle, rectifies the AC power, which is input to the vehicle battery.

### PRIOR ART DOCUMENT

### PATENT DOCUMENT

Patent Document 1: Japanese Laid-Open Patent Publication No. 2009-106136

### SUMMARY OF THE INVENTION

### PROBLEMS THAT ARE TO BE SOLVED BY THE INVENTION

When the load on a power transmission line changes in accordance with the distance between the primary side resonance coil and the secondary side resonance coil or the state of charge of the vehicle battery, AC power may not be input in a preferable manner to a load. This may lower the transmission efficiency during contactless power transmission. Such a problem also occurs when using electromagnetic induction to transmit power.

It is an objective of the present invention to provide a contactless power transmission device that transmits power in a preferable manner by recognizing the condition in which AC power is input to a load.

### MEANS FOR SOLVING THE PROBLEM

To achieve the above object, one aspect of the present invention is a contactless power transmission device including an AC power supply, a primary coil, a secondary coil, an electric component, and a power factor calculation unit. The primary coil is supplied with AC power from the AC power supply. The secondary coil is capable of receiving the AC power from the primary coil. The electric component is supplied with the AC power received by the secondary coil. The power factor calculation unit calculates at least one of a power factor of a load from an output portion of the AC power supply to the electric component and a power factor of a load from an output portion of the secondary coil to the electric component.

In the above configuration, the calculation of at least one of a power factor of a load from an output portion of the AC power supply to the electric component and a power factor of a load from an output portion of the secondary coil to the electric component allows for direct recognition of the amount of AC power supplied from the AC power supply that is effectively input to the load. Further, when the load changes in accordance with a change in the distance between the primary coil and the secondary coil, and this changes the AC power that is effectively input to the load, such a change can be directly recognized. By controlling power transmission based on the power factor, power transmission may be performed in a preferable manner.

Preferably, the contactless power transmission device further includes a control unit that controls the AC power supply based on a calculation result of the power factor calculation unit.

In the above configuration, as a control corresponding to changes in the power factor, the AC power supply is controlled. This allows for changes in the power factor to be flexibly coped with. For example, the AC power supply may be controlled to decrease the AC power or stop the supply of AC power in order to limit increases in the power loss caused by a decrease in the power factor or limit heat generation caused by a power loss. Further, the AC power supply may be controlled so that stable power transmission is performed regardless of changes in the power factor.

Preferably, the control unit executes a control for stopping the supply of the AC power from the AC power supply based on the calculation result of the power factor calculation unit.

Preferably, the contactless power transmission device further includes a power factor improvement unit that functions to improve the power factor calculated by the power factor calculation unit.

The above configuration may maintain a high power factor even when a change in the distance between the primary coil and the secondary coil or the like changes the load. This allows a high transmission efficiency to be maintained regardless of changes in the load.

Preferable, the contactless power transmission device further includes a comparison unit. The comparison unit compares a starting power factor calculated by the power factor calculation unit with a predetermined initial power factor when starting power transmission between the primary coil and the secondary coil. The comparison unit compares the power factor calculated by the power factor calculation unit with the starting power factor when power transmission is being performed between the primary coil and the secondary coil.

Preferably, the secondary coil and the electric component are arranged in a vehicle. The AC power supply and the primary coil are arranged on ground. The electric component includes a vehicle battery.

### BRIEF DESCRIPTION OF THE DRAWINGS

Fig. 1 is a block diagram of a contactless power transmission device according to a first embodiment of the present invention.
Fig. 2 is a block diagram of a contactless power transmission device according to a second embodiment of the present invention.

### EMBODIMENTS OF THE INVENTION

### First Embodiment

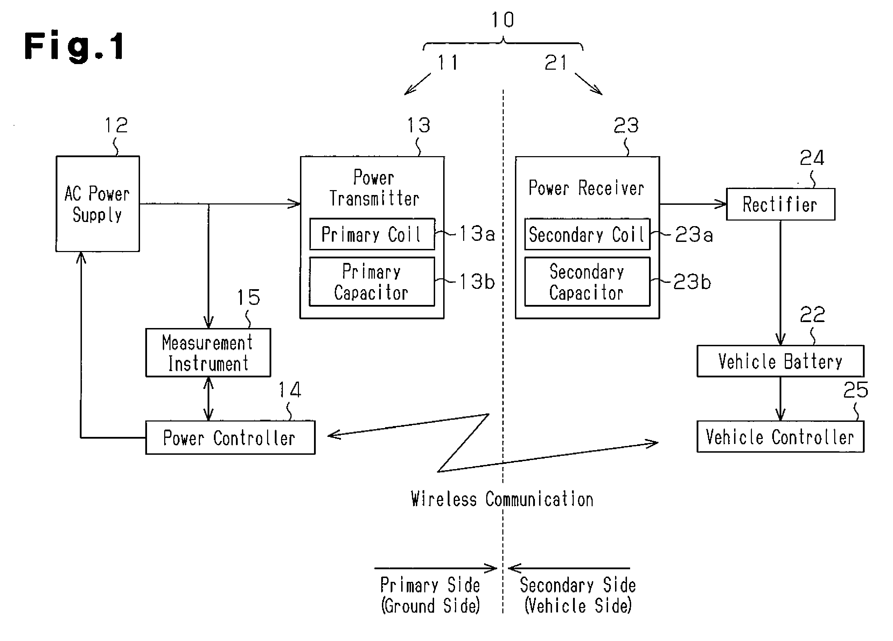

A first embodiment of a contactless power transmission device according to the present invention will now be described with reference to Fig. 1.

As shown in Fig. 1, the contactless power transmission device 10 includes a ground device 11, which is arranged on ground, and a vehicle device 21, which is installed in a vehicle. The ground device 11 corresponds to a primary side (power supplying side) structure, and the vehicle device 21 corresponds to a secondary side (power receiving side) structure.

The ground device 11 includes an AC power supply 12, which is capable of supplying AC power having a predetermined frequency (e.g., 10 kHz to 10 MHz), and a power transmitter 13. The power transmitter 13 is electrically connected to the AC power supply 12, and the power transmitter 13 is supplied with AC power from the AC power supply 12. The vehicle device 21 includes a vehicle battery 22 and a power receiver 23, which is capable of receiving AC power from the power transmitter 13.

The power transmitter 13 and the power receiver 23 are formed to allow for magnetic field resonance to occur in the power transmitter 13 and the power receiver 23. More specifically, the power transmitter 13 includes a resonance circuit formed by a primary coil 13a and a primary capacitor 13b, which are connected in parallel. The power receiver 23 includes a resonance circuit formed by a secondary coil 23a and a secondary capacitor 23b. The two have the same resonance frequency.

The vehicle device 21 includes a rectifier 24 that rectifies the AC power, which is received by the power receiver 23, to DC power. The rectifier 24 electrically connects the vehicle battery 22 to the power receiver 23. The DC power rectified by the rectifier 24 is supplied to the vehicle battery 22. The rectifier 24 and the vehicle battery 22 correspond to electric components.

The ground device 11 includes a power controller 14 that serves as a control unit electrically connected to the AC power supply 12. The power controller 14 controls the AC power supply 12 or the like. The vehicle device 21 includes a vehicle controller 25 electrically connected to the vehicle battery 22. The vehicle controller 25 is configured to be able to detect the state of charge of the vehicle battery 22. Further, the controllers 14 and 25 are configured to be capable of performing wireless communication with each other. This allows for information to be exchanged between the controllers 14 and 25.

The vehicle controller 25 transmits a chargeable signal to the power controller 14 when the vehicle is located at a chargeable location, more specifically, a location where magnetic field resonance may occur in the power transmitter 13 and the power receiver 23. When receiving the chargeable signal, the power controller 14 controls the AC power supply 12 so that AC power is supplied. This causes magnetic field resonance at the power transmitter 13 (primary coil 13a) and the power receiver 23 (secondary coil 23a), and the power receiver 23 (secondary coil 23a) receives AC power. The rectifier 24 rectifies the received AC power and supplies the power to the vehicle battery 22. This charges the vehicle battery 22 in a contactless manner without using a power cable or the like.

When the charging of the vehicle battery 22 is completed (ended), the vehicle controller 25 transmits a charge completion signal (charge end signal) to the power controller 14. When receiving the charge completion signal, the power controller 14 controls the AC power supply 12 to stop the supply of AC power.

The contactless power transmission device 10 includes a configuration for calculating the power factor of a load from an output portion of the AC power supply 12 to the vehicle battery 22. The configuration will now be described.

The ground device 11 includes a measurement instrument 15 that measures the apparent power and the effective power input to a load from the output portion of the AC power supply 12 to the vehicle battery 22. The measurement instrument 15 is connected to the output portion of the AC power supply 12 and measures the apparent power and the effective power from the waveforms of the voltage and current input to the load.

The load from the output portion of the AC power supply 12 to the vehicle battery 22 refers to the entire load (input impedance) from the output portion of the AC power supply 12 to the vehicle battery 22. The load includes mutual inductance of the primary coil 13a and the secondary coil 23a, the load of the vehicle battery 22, the load of a wire connecting the power receiver 23 and the rectifier 24, and the like. In other words, the measurement instrument 15 measures the effective power for the load when the load from the output portion of the AC power supply 12 to the vehicle battery 22 is considered as one load.

The measurement instrument 15 is electrically connected to the power controller 14. In accordance with a request from the power controller 14, the measurement instrument 15 transmits information specifying the measured apparent power and effective power to the power controller 14. The power controller 14 calculates the power factor from the information. The measurement instrument 15 and the power controller 14 correspond to a power factor calculation unit.

The configuration related to a control using the power factor will now be described.

When the power controller 14 starts charging the vehicle battery 22, the power controller 14 calculates the starting power factor, which is the power factor under the starting condition. More specifically, when supplied with AC power from the AC power supply 12, the power controller 14 requests the measurement instrument 15 for information of the apparent power and the effective power. Then, the power controller 14 calculates the starting power factor based on the information received from the measurement instrument 15. Subsequently, the power controller 14 determines whether or not the calculated starting power factor is lower than a predetermined initial power factor.

When the starting power factor is lower than the initial power factor, the power controller 14 stops the supply of AC power from the AC power supply 12. When the starting power factor is higher than the initial power factor, the power controller 14 continues the supply of AC power and stores the starting power factor in a memory (not shown), such as a RAM, of the power controller 14.

When charging is being performed, the power controller 14 calculates the power factor in predetermined cycles and compares the calculated power factor with the starting power factor stored in the memory. More specifically, the power controller 14 determines whether or not the difference between the calculated power factor and the starting power factor is less than a predetermined tolerable change value. When the difference is less than the tolerable change value, the power controller 14 continues the supply of AC power. When the difference is greater than the tolerable change value, the power controller 14 stops the supply of AC power.

The operation of the contactless power transmission device 10 will now be described.

When charging is started, the starting power factor is compared with the initial power factor. When the starting power factor is less than the initial power factor, the supply of AC power is stopped. This avoids a situation in which charging is performed when the starting power factor is low.

Further, the power factor is periodically calculated during charging, and the calculated power factor is compared with the starting power factor. When the difference between the calculated power factor and the starting power factor is greater than the tolerable change value, the supply of AC power is stopped. Thus, when an anomaly occurs during charging and the power factor decreases, charging is discontinued.

When the distance is changed between the coils 13a and 23a (power transmitter 13 and power receiver 23), the mutual inductance is changed between the coils 13a and 23a. This changes the load from the output portion of the AC power supply 12 to the vehicle battery 22. Thus, the starting power factor may be changed in accordance with the distance between the coils 13a and 23a. In this regards, as described above, when charging is performed, the AC power is controlled based on the change width (difference) from the starting power factor. This eliminates factors for varying the starting power factor that is based on the change in the distance between the coils 13a and 23a.

The present embodiment has the advantages described below.
(1) The measurement instrument 15 is used to measure the apparent power and the effective power that are input to the load from the output portion of the AC power supply 12 to the vehicle battery 22. Based on the apparent power and the effective power, the power controller 14 calculates the power factor of the load from the output portion of the AC power supply 12 to the vehicle battery 22. This allows for direct recognition on how effectively AC power supplied from the AC power supply 12 be input to the load, which is formed by the power transmitter 13, the power receiver 23, the rectifier 24, the vehicle battery 22, and a line electrically connecting these elements. Further, when the AC power (effective power) input to the load changes in accordance with a change in the distance between the coils 13a and 23a or a change in the load of the vehicle battery 22 that changes the load from the output portion of the AC power supply 12 to the vehicle battery 22, such a change may be directly recognized.
   Here, the transmission efficiency may also be calculated. However, the transmission efficiency is determined by various factors including the power factor. That is, the transmission efficiency is an indirect parameter including a plurality of factors. In a configuration that recognizes the power transmission condition based on the power transmission efficiency, it cannot be directly recognized which one of the factors has an anomaly.
   In contrast, the present embodiment is a configuration that calculates the power factor. This allows for direct recognition of the input condition of AC power to the load that is one factor for a decrease in the transmission efficiency. In detail, how effectively AC power is used is directly recognized. Thus, it may be directly recognized whether or not there is a problem in the power factor. By executing various controls based on the recognition result, power transmission may be performed in a preferable manner.
   In particular, when performing power transmission using magnetic field resonance in a relatively low frequency band of, for example, 10 kHz to 100 kHz, a power factor indicating how effectively AC power be input to the load is a significant parameter for determining the transmission efficiency. In this regards, in the present embodiment, the power factor is directly recognized. This allows for preferable recognition of the input condition of the AC power to the load in a relatively low frequency band.
   When the power factor is not "1", that is, when there is ineffective power, the ineffective power results in heat loss and generates heat. Thus, when charging is performed under a condition in which the power factor is low, heat may cause adverse results such as a change in the resonance frequency. In contrast, the present embodiment allows for recognition of heat loss through direct recognition of the power factor. This avoids problems caused by heat generation.
(2) The starting power factor, which is the power factor when starting charging, is calculated. Further, it is determined whether or not the starting power factor is lower than the initial power factor. When the starting power factor is lower than the initial power factor, the supply of AC power from the AC power supply 12 is stopped. This limits situations in which charging is continued when the power factor is low.
   The starting power factor is small when the coils 13a and 23a (power transmitter 13 and power receiver 14) are located at positions that do not allow for magnetic field resonance. Even when the coils 13a and 23a are located at positions that allow for magnetic field resonance but the distance between the coils 13a and 23a is outside the range suitable for resonance, the starting power factor is small. The starting power factor also becomes low when a foreign object such as a piece of metal exists between the coils 13a and 23a, when the resonance frequency of the power transmitter 13 differs from the resonance frequency of the power receiver 23, and when an anomaly occurs in at least one of the devices 11 and 21.
   In this regards, in the present embodiment, when an anomaly occurs as described above, charging is discontinued. This avoids a situation in which charging is performed when charging is not suitable as described above.
   Factors that change the power factor during charging may include, for example, insertion of a foreign object such as a piece of metal between the coils 13a and 23a, a change in the distance between the coils 13a and 23a due to movement of the vehicle, and an anomaly in the devices 11 and 21.
(4) The contactless power transmission device 10 charges the vehicle battery 22, which is arranged in the vehicle device 21. The vehicle battery 22 is required to have a large capacitance as compared with a battery for a device such as a cellular phone or the like. Thus, the contactless power transmission device 10 handles extremely high power. Consequently, if charging is performed when the power factor is low, the ineffective power is large and heat is generated. The ineffective power and heat are of levels that can be ignored in devices such as cellular phones but cannot be ignored in the contactless power transmission device 10 that handles high power.

In this regards, in the contactless power transmission device 10 that handles high power to charge the vehicle battery 22, charging is avoided when the power factor is low. This limits increases in the power consumption related to charging that cannot be ignored and limits heat generation.

### Second Embodiment

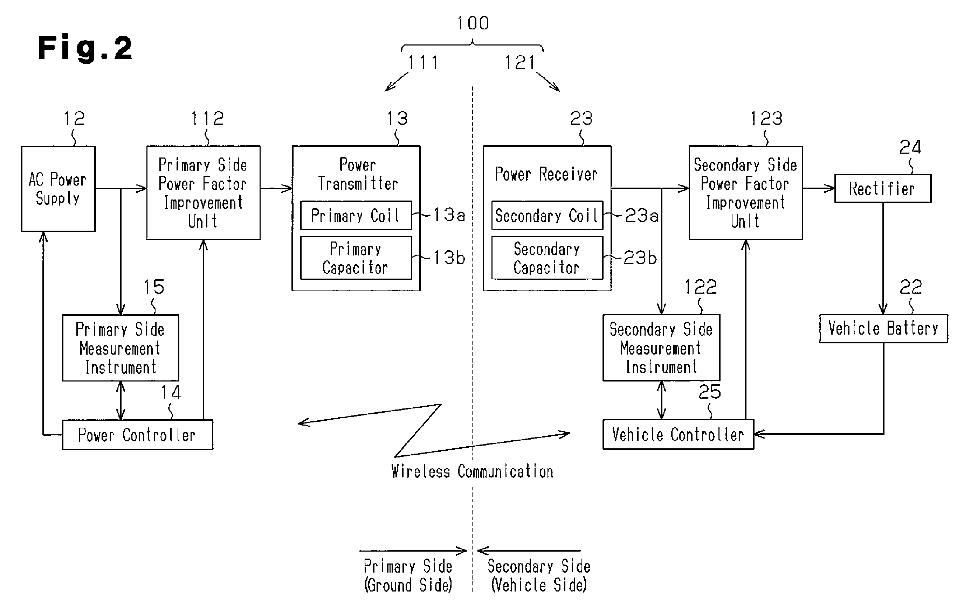

Referring to Fig. 2, a contactless power transmission device 100 of the present embodiment differs from the contactless power transmission device 10 of the first embodiment in that a configuration for calculating the power factor is employed in both of the primary side (ground side) and the secondary side (vehicle side) and in that a configuration for improving each power factor is employed. These points will be described hereafter. Same reference numerals are given to those components that are the same as the corresponding components of the first embodiment. Such components will not be described.

A vehicle device 121 includes a measurement instrument 122 that measures the apparent power and the effective power input to a load from the output portion of the power receiver 23 (secondary coil 23a) to the vehicle battery 22. To distinguish the measurement instrument 122 from the measurement instrument of a ground device 111 (measurement instrument 15 of the first embodiment), in the description hereafter, the measurement instrument 15 of the ground device 111 is referred to as the primary side measurement instrument 15, and the measurement instrument 122 of the vehicle device 121 is referred to as the secondary side measurement instrument 122.

The secondary side measurement instrument 122 is electrically connected to the vehicle controller 25. In accordance with a request from the vehicle controller 25, the secondary side measurement instrument 122 transmits information specifying the measured apparent power and effective power to the vehicle controller 25. Based on the information from the secondary side measurement instrument 122, the vehicle controller 25 calculates the power factor of the load from the output portion of the power receiver 23 to the vehicle battery 22.

In the description hereafter, the power factor calculated by the power controller 14, that is, the power factor of the load from the output portion of the AC power supply 12 to the vehicle battery 22 is referred to as the first power factor. The power factor calculated by the vehicle controller 25, that is, the power factor of the load from the output portion of the power receiver 23 to the vehicle battery 22 is referred to as the second power factor.

The configuration for improving the power factor will now be described. A primary side power factor improvement unit 112 is arranged between the AC power supply 12 and the power transmitter 13 in the ground device 111. A secondary side power factor improvement unit 123 is arranged between the power receiver 23 and the rectifier 24 in the vehicle device 121. Each of the power factor improvement units 112 and 123 correspond to a power factor improvement portion.

Each of the power factor improvement units 112 and 123 is configured to have a variable capacitance. In detail, each of the power factor improvement units 112 and 123 is configured by an LC circuit formed by a variable capacitor and a coil. Each of the power factor improvement units 112 and 123 is electrically connected to a controller that calculates the power factor, which serves as an improvement subject. In detail, the primary side power factor improvement unit 112 is electrically connected to the power controller 14, and the secondary side power factor improvement unit 123 is electrically connected to the vehicle controller 25.

When starting charging, the power controller 14 calculates the first power factor based on the measurement result of the primary side measurement instrument 15 to execute feedback control that variably controls the capacitance of the primary side power factor improvement unit 112 so that the calculated first power factor approaches "1". Further, the power controller 14 executes the feedback control at a predetermined frequency (cycle) during charging. In other words, the primary side power factor improvement unit 112 functions to improve the first power factor (approach "1 ") calculated by the power controller 14.

In the same manner as the power controller 14, when starting charging and during charging, the vehicle controller 25 calculates the second power factor based on the measurement result of the secondary side measurement instrument 122. Further, the vehicle controller 25 executes feedback control that variably controls the capacitance of the secondary side power factor improvement unit 123 so that the calculated second power factor approaches "1".

The power controller 14 compares the first power factor, which has become close to "1" by executing feedback control when starting charging, with the initial power factor. When the first power factor is lower than the initial power factor, this indicates that the primary side power factor improvement unit 112 has an anomaly that is difficult to fix. Thus, the power controller 14 stops the supply of AC power.

The operation of the contactless power transmission device 100 in the present embodiment will now be described.

When charging is started, the primary side power factor improvement unit 112 functions so that the first power factor approaches "1". Thus, charging is performed under a condition in which the first power factor is close to "1" regardless of changes in the distance between the coils 13a and 23a. When the first power factor decreases during charging, for example, when a change in the state of charge of the vehicle battery 22 changes the load of the vehicle battery 22 and lowers the first power factor, feedback control is executed so that the first power factor approaches "1". This constantly keeps the first power factor high.

Further, when starting charging and during charging, the secondary side power factor improvement unit 123 functions so that the second power factor approaches "1". This keeps the second power factor high regardless of changes in the load caused by a change in the stage of charge of the vehicle battery 22.

In addition to advantages (1) to (4) of the first embodiment, the second embodiment has the advantages described below.
(5) The ground device 111 includes the primary side power factor improvement unit 112 that functions to improve the first power factor calculated by the power controller 14. Thus, even when a change or the like in the distance between the coils 13a and 23a changes the load from the output portion of the AC power supply 12 to the vehicle battery 22 or when the load is changed during charging, the first power factor is kept high. By keeping the transmission efficiency high, stable power transmission may be realized.
(6) The vehicle device 121 includes the secondary side measurement instrument 122 and the secondary side power factor improvement unit 123 that functions to calculate the second power factor of the load from the output portion of the power receiver 23 (secondary coil 23a) to the vehicle battery 22 and then improves the calculated second power factor. This allows the transmission efficiency to be further improved by increasing the second power factor. Further, regardless of a load change caused by a change in the state of charge of the vehicle battery 22, the second power factor may be high, and stable power transmission may be realized.

The above embodiments may be modified as described below.

In the second embodiment, the contactless power transmission device 100 may be configured so that when charging is started, the first power factor is improved after improving the second power factor. In other words, the primary side power factor improvement unit 112 may be configured to operate after the secondary side power factor improvement unit 123 operates. This avoids a situation in which the first power factor decreases due to a load change resulting from the improvement of the second power factor.

In detail, when the secondary side power factor improvement unit 123 functions to improve the second power factor (capacitance is variably controlled), the load related with the improvement subject of the primary side power factor improvement unit 112 is changed. Thus, the first power factor may be decreased when the second power factor is improved after the first power factor is improved. When configuring so that the first power factor is improved again, the control may become complicated.

Thus, by improving the first power factor after the second power factor is improved, a decrease in the first power factor may be avoided that would be caused by a change in the load caused by the improvement of the second power factor. This improves each power factor and simplifies the control.

The order for power factor improvement may be set, for example, through the following configuration. First, when the power transmitter 13 and the power receiver 23 are located at positions allowing for magnetic field resonance, the vehicle controller 25 performs feedback control for improving the second power factor. Then, the vehicle controller 25 outputs a chargeable signal when improvement of the second power factor is completed (ended). When the power controller 14 receives the chargeable signal, the power controller 14 executes feedback control for improving the first power factor.

The order of the power factor improvement is not limited to a configuration that improves the first power factor after improving the second power factor. The power factor improvement may be in any order. For example, the order may be reversed. Alternatively, each power factor may be performed at the same time. However, when simplifying control, it is preferable that the first power factor be improved after the second power factor is improved.

In the second embodiment, when the capacitance of the secondary side power factor improvement unit 123 is updated (changed) during charging, the capacitance of the primary side power factor improvement unit 112 may also be updated. This allows for the primary side power factor improvement unit 112 to follow changes in the load caused by improvement of the second power factor.

In the second embodiment, the vehicle controller 25 may transmit information of the second power factor through wireless communication to the power controller 14. This allows the power controller 14 to execute control based on the second power factor.

The second power factor that is transmitted may be any one of a second power factor prior to the feedback control and a second power factor subsequent to the feedback control. As an example of a specific configuration of the control of the power controller 14 when receiving the second power factor, it is determined whether or not the second power factor is lower than the initial power factor or a threshold that differs from the initial power factor. When the second power factor is lower than the initial power factor or the like, the supply of AC power may be stopped or the AC power may be increased.

In the second embodiment, the first power factor and the second power factor are both calculated. However, only one of the first power factor and the second power factor needs to be calculated. When calculating only the second power factor, as described above, the second power factor may be transmitted to the power controller 14, and the power controller 14 may execute AC power control based on the received second power factor.

As a configuration for calculating only the second power factor, the primary side power factor improvement unit 112 (and secondary side power factor improvement unit 123) may be operated based on the second power factor. Further, as a configuration for calculating only the first power factor, the secondary side power factor improvement unit 123 (and primary side power factor improvement unit) may be operated based on the first power factor. That is, the power factor improvement unit may be operated by one of the ground device 111 (primary side) and the vehicle device 121 (secondary side) based on the power factor calculated by the other one of the ground device 111 and the vehicle device 121. Alternatively, the power factor improvement units 112 and 123 may both be operated based on the power factor calculated by one of the ground device 111 and the vehicle device 121.

The power transmitter 13 may include a primary side coupling coil coupled through electromagnetic induction to a resonance circuit formed by the primary coil 13a and the primary capacitor 13b. In this case, the primary side coupling coil is connected to the AC power supply 12, and the resonance circuit is configured to be supplied with AC power thorough electromagnetic induction from the primary side coupling coil. In the same manner, the power receiver 23 includes a secondary side coupling coil coupled through electromagnetic induction to a resonance circuit, which is formed by the secondary coil 23a and the secondary capacitor 23b, and AC power may be obtained from the resonance circuit using the secondary side coupling coil. In this case, the load that is subject to the first power factor includes each coupling coil, and the load that is subject to the second power factor is the load from the output portion of the secondary coupling coil to the vehicle battery 22.

The above configuration may include at least one of a configuration that calculates the power factor of the load from the output portion of the primary side coupling coil to the vehicle battery 22 and a configuration that calculates the power factor of the load from the output portion of the secondary coil 23a to the vehicle battery 22. A separate configuration for improving the power factors may also be used. In this case, the transmission efficiency may be further improved.

In each of the above embodiments, during charging, the trigger for stopping the supply of AC power of the AC power supply 12 is when the difference of the calculated power factor and the starting power factor is greater than the tolerable change value. Instead, for example, the trigger may be when the calculated power factor becomes less than the initial power factor (or a threshold that differs from the initial power factor).

Further, the previously calculated power factor may be compared with the presently calculated power factor, and the trigger may be when the difference is greater than the tolerable change value. Additionally, a detector that detects the distance between the coils 13a and 23a may be arranged between the coils 13a and 23a. When the vehicle is moved during charging of the vehicle battery 22, the power factor is calculated whenever the vehicle moves, that is, whenever the distance between the coils 13a and 23a is changed, and the calculated power factor is updated as the comparison subject.

Before starting charging of the vehicle battery 22, the AC power supply 12 may be controlled to output AC power that is used for testing and is smaller than the AC power used for charging. In this case, the power factor may be adjusted before starting charging. Thus, charging may be started under a condition in which the power factor is adjusted in advance, and the charging of the vehicle battery 22 may be performed in a further preferable manner.

In the first embodiment, the supply of AC power is stopped when the starting power factor is lower than the initial power factor. Instead, the output of the AC power may be adjusted in accordance with the starting power factor. For example, the AC power may be adjusted in accordance with the starting power factor so that the effective power is constant, which is input to the load from the output portion of the AC power supply 12 to the vehicle battery 22. This allows for the input of constant effective power to the load regardless of changes in the power factor.

In the second embodiment, the power factor improvement units 112 and 123 are configured so that the capacitance is variable. Instead, at least one of the inductance and the capacitance may be variable. Further, the configuration for achieving such a condition is not limited, and any configuration may be used.

The measurement instrument 15 measures the apparent power and the effective power, and transmits the measurement result to the power controller 14. Instead, for example, the measurement instrument 15 may calculate the power factor and transmit the calculation result. Alternatively, the measurement instrument 15 may transmit information related to the voltage waveform and the current waveform to the power controller 14, and the power controller 14 may calculate the apparent power, the effective power, and the power factor.

The AC voltage supplied from the AC power supply 12 may have any waveform, for example, a pulse waveform, a sine waveform, or the like.

In each embodiment, the AC power received by the power receiver 23 is used to charge the vehicle battery 22. However, the received AC power may be used in any manner.

In each embodiment, the capacitors 13b and 23b are used to perform magnetic field resonance. However, the capacitors 13b and 23b may be emitted. In this case, parasitic capacitors of the coils 13a and 23a may be used to cause magnetic field resonance.

In each embodiment, magnetic field resonance is used to realize contactless power transmission. Instead, electromagnetic induction may be used.

## Claims

1. A contactless power transmission device comprising:
an AC power supply;
a primary coil supplied with AC power from the AC power supply;
a secondary coil capable of receiving the AC power from the primary coil;
an electric component supplied with the AC power received by the secondary coil; and
a power factor calculation unit that calculates at least one of a power factor of a load from an output portion of the AC power supply to the electric component and a power factor of a load from an output portion of the secondary coil to the electric component.

2. The contactless power transmission device according to claim 1, further comprising a control unit that controls the AC power supply based on a calculation result of the power factor calculation unit.

3. The contactless power transmission device according to claim 2, wherein the control unit executes a control for stopping the supply of the AC power from the AC power supply based on the calculation result of the power factor calculation unit.

4. The contactless power transmission device according to any one of claims 1 to 3, further comprising a power factor improvement unit that functions to improve the power factor calculated by the power factor calculation unit.

5. The contactless power transmission device according to any one of claims 1 to 4, further comprising a comparison unit, wherein
the comparison unit compares a starting power factor calculated by the power factor calculation unit with a predetermined initial power factor when starting power transmission between the primary coil and the secondary coil, and
the comparison unit compares the power factor calculated by the power factor calculation unit with the starting power factor when power transmission is being performed between the primary coil and the secondary coil.

6. The contactless power transmission device according to any one of claims 1 to 5, wherein
the secondary coil and the electric component are arranged in a vehicle,
the AC power supply and the primary coil are arranged on ground, and
the electric component includes a vehicle battery.

## Amended claims

### Amended claims under Art. 19.1 PCT

1. (Amended) A contactless power transmission device comprising:
an AC power supply;
a primary coil supplied with AC power from the AC power supply;
a secondary coil capable of receiving the AC power from the primary coil;
an electric component supplied with the AC power received by the secondary coil;
a power factor calculation unit that calculates at least one of a power factor of a load from an output portion of the AC power supply to the electric component and a power factor of a load from an output portion of the secondary coil to the electric component; and
a control unit that controls the AC power supply based on a calculation result of the power factor calculation unit, wherein
the control unit executes a control for stopping the supply of the AC power from the AC power supply based on the calculation result of the power factor calculation unit.

2. (Amended) The contactless power transmission device according to claim 1, further comprising a power factor improvement unit that functions to improve the power factor calculated by the power factor calculation unit.

3. (Amended) The contactless power transmission device according to claim 1, further comprising a comparison unit, wherein
the comparison unit compares a starting power factor calculated by the power factor calculation unit with a predetermined initial power factor when starting power transmission between the primary coil and the secondary coil, and
the comparison unit compares the power factor calculated by the power factor calculation unit with the starting power factor when power transmission is being performed between the primary coil and the secondary coil.

4. (Amended) The contactless power transmission device according to claim 1, wherein
the secondary coil and the electric component are arranged in a vehicle,
the AC power supply and the primary coil are arranged on ground, and
the electric component includes a vehicle battery.

5. (Canceled)

6. (Canceled)
